# EUROPEAN PATENT APPLICATION

(11) **EP 1 810 996 A1**
(43) Date of publication of application: **25.07.2007**
(21) Application number: 05805121.0
(22) Date of filing: 20.10.2005
(51) Int. Cl.: C08L 95/00, C08K 5/00, C08L 23/26, C08L 101/10, C08L 33/06, C08L 63/00, C09J 195/00, C09J 201/10, C09J 123/26, C09J 133/06, C09J 163/00, C09K 3/10, C09K 3/00, E01C 7/26, E04D 7/00

(54) **CURABLE COMPOSITION**

(30) Priority: 25.10.2004 JP 2004310130
(71) Applicant: Kaneka Corporation, Kita-ku Osaka-shi, Osaka 530-8288 (JP)
(72) Inventor: KAWAKAMI, Atsushi, Takasago-shi, Hyogo 6760026 (JP); ANDO, Katsuhiro, Akashi-shi, Hyogo 6740067 (JP)
(74) Representative: Vossius & Partner
(86) International application number: PCT/JP2005/019340
(87) International publication number: WO 2006/046473

(57) **Abstract**

A curable composition contains a bituminous substance (A) and a saturated hydrocarbon polymer (B) having a reactive silicon group represented by the general formula (1):

*-*Si(R¹₃₋ₐ)Xₐ (1)

(wherein R¹ is a C₁-C₂₀ alkyl group, a C₆-C₂₀ aryl group, a C₇-C₂₀ aralkyl group, or a triorganosiloxy group represented by (R'O)₃Si-; when two R¹s are present, they may be the same or different; the three R's each represent a C₁-C₂₀ monovalent hydrocarbon group and may be the same or different; X is a hydroxyl group or hydrolyzable group; when two or more Xs are present, they may be the same or different; and a is 1, 2, or 3).

## Description

### TECHNICAL FIELD

The present invention relates to a curable composition containing a bituminous substance and a reactive silicon group-containing saturated hydrocarbon polymer. It also relates to an adhesive for tiles, a waterproof material, a road paving material, a water stopping material for civil engineering, and a damping material prepared from the curable composition.

### BACKGROUND ART

Bituminous substances such as asphalt have excellent adhesiveness, workability, and waterproofing property and are inexpensive. Thus, they are widely used as one of easy-to-use materials in the fields of road paving materials, roofing materials, sealing materials, adhesives, waterway lining materials, damping materials, and sound insulating materials.

For example, upon using asphalt as a roofing material, so-called hot-applied asphalt waterproofing roofing method, comprising laminating a plurality of layers of asphalt to form a waterproofing layer has been widely used as the mainstream of waterproofing work. This method achieves high waterproofing reliability Nonetheless, the method has drawbacks in that, when asphalt is melted, significantly large amounts of fumes and odor generated from the molten asphalt seriously pollutes surrounding environment. Thus, the method has been avoided to apply in residential areas and central urban areas, and the applicable area has been limited. Moreover, workers also hate to perform this method considering the risk of burn injury.

To overcome these problems, an autohesion roofing method, which is one of cold roofing methods, has been developed and it is becoming established nowadays. However, in this method, a large amount of releasing paper peeled off during the working must be discarded, and this poses a serious problem.

As materials for roofing, blown asphalt, which is produced through air blowing treatment, is generally used in the roofing material applications. However, with respect to the properties, the blown asphalt is generally brittle and cracks easily at low temperature due to breaking of materials by the affection of ambient temperature or its hardness. In contrast, asphalt having satisfactory low temperature properties may undergo fluidization or deformation beyond acceptable levels in summer season. Epoxy resin-based asphalt materials have been developed to overcome this problem. The epoxy resin-based asphalt material has increased strength and it contributes to decrease formation of ruts in summer season. However, such a drawback as cracking in winter has not been overcome yet.

In recent years, an attempt to impart elasticity by adding a rubber modifier, such as natural rubber, styrene-butadiene rubber, or chloroprene rubber, has been made to overcome the problem of cracking (refer to Patent document 1, for example). However, these rubber modifiers have low compatibility with asphalt and do not easily give a homogenous composition. Thus, long-time stirring under high temperature is required to disperse the modifier in the asphalt. As a result, modification of the asphalt by rubber modifiers may become insufficient, and thereby results in insufficient adhesion to base materials and unsatisfactory waterproofing or water stopping performance.
[Patent document 1] Japanese Unexamined Patent Application Publication No. 10-279808

### DISCLOSURE OF THE INVENTION

### - Problems which the invention is to solve

Accordingly, it is an object of the present invention to provide an ambient-temperature curable asphalt composition that produces neither fume nor odor during working, causes no volatilization of solvents, and has satisfactory waterproof adhesiveness to mortar.

### - Means for solving the problem

The present inventors have conducted extensive studies and, as a result, found that a curable composition having satisfactory water resistance can be obtained by mixing a bituminous substance with a saturated hydrocarbon polymer having a reactive silicon group. The present invention has been made based on this finding.

The present invention provides the following items (1) to (18):
(1) A curable composition, which comprises
   a bituminous substance (A); and
   a saturated hydrocarbon polymer (B) having a reactive silicon group represented by the general formula (1):

   -Si(R¹₃₋ₐ)Xₐ (1)

   (wherein R¹ is a C₁-C₂₀ alkyl group, a C₆-C₂₀ aryl group, a C₇-C₂₀ aralkyl group, or a triorganosiloxy group represented by (R'O)₃Si-; when two R¹s are present, they may be the same or different; the three R's each represent a C₁-C₂₀ monovalent hydrocarbon group and may be the same or different; X is a hydroxyl group or hydrolyzable group; when two or more Xs are present, they may be the same or different; and a is 1, 2, or 3) ;
(2) The curable composition described in the above item (1),
   wherein the saturated hydrocarbon polymer (B) has a main chain skeleton composed of polyisobutylene;
(3) The curable composition described in the above item (1) or (2) above, which further comprises
   a plasticizer (C);
(4) The curable composition described in the above item (3),
   wherein the plasticizer (C) is an aromatic oligomer or a completely or partially hydrogenated aromatic oligomer;
(5) The curable composition described in the above item (3),
   wherein the plasticizer (C) is a sulfonate compound or a sulfonamide compound;
(6) The curable composition described in any one of the above items (1) to (5), which further comprises
   an epoxy resin (D);
(7) The curable composition described in the above item (6),
   wherein the epoxy resin (D) is contained in an amount of 5 to 120 parts by weight per 100 parts by weight of the bituminous substance (A);
(8) The curable composition described in any one of the above items (1) to (7), which comprises
   an alkyl (meth)acrylate polymer (E);
(9) The curable composition described in the above item (8),
   wherein the molecular chain of the alkyl (meth)acrylate polymer (E) is composed of an alkyl (meth)acrylate monomer unit (a) having an alkyl group containing 1 to 8 carbon atoms and an alkyl (meth)acrylate monomer unit (b) having an alkyl group containing 10 or more carbon atoms.
(10) The curable composition described in the above item (8) or (9),
   wherein the alkyl (meth)acrylate polymer (E) is a polymer having a reactive silicon group represented by the general formula (1) above;
(11) The curable composition described in any one of the above items (1) to (10),
   which further comprises a tackifier resin (F);
(12) The curable composition described in the above item (11),
   wherein the tackifier resin (F) is a tackifier resin modified with phenol and/or an alkylphenol;
(13) The curable composition described in any one of the above items (1) to (12),
   wherein the bituminous substance (A) is a natural asphalt and/or a petroleum asphalt;
(14) An adhesive for tiles, the adhesive comprising
   the curable composition described in any one of the above items (1) to (13);
(15) A waterproof material, which comprises
   the curable composition described in any one of the above items (1) to (13);
(16) A road paving material, which comprises
   the curable composition described in any one of the above items (1) to (13);
(17) A water stopping material for civil
   engineering, the water stopping material comprising the curable composition described in any one of the above items (1) to (13); and
(18) A damping material, which comprise
   the curable composition described in any one of the above items (1) to (13).

### - Effect of the invention

The present invention provides a curable composition having excellent water resistance, curability, and storage stability, requiring no thermal melting during working, and generating no fume or odor.

### BEST MODE FOR CARRYING OUT THE INVENTION

A bituminous substance (A) used in the present invention may be a natural asphalt, e.g. a lake asphalt or a rock asphalt such as Trinidad epure, gilsonite, or pyrobitumen, or a cut-back asphalt containing them; a petroleum asphalt or pitch such as a straight asphalt or a blown asphalt produced during a petroleum refining process, or a cut-back asphalt containing them; a mixed bitumen such as pitch bitumen or a pitch mixture; or petroleum process oil such as heavy catalytically cracked cycle oil, light catalytically cracked cycle oil, lubricating oil, a distillate thereof, or another distillate subjected to treatment such as extraction, refinement, hydrogenation, or the like. A mixture of these may also be used as the bituminous substance (A). In particular, the straight asphalt produced during petroleum refining processes is particularly preferable since high compatibility and stable dispersibility are exhibited between the straight asphalt and the component (B).

The meaning of the "main chain skeleton of a reactive silicon group-containing saturated hydrocarbon polymer (B)" in this invention is "a polymer containing substantially no C-C unsaturated bond other than aromatic rings". The polymer constituting the main chain skeleton of the reactive silicon group-containing saturated hydrocarbon polymer used in the present invention can be produced by the following processes:
(I) a process comprising polymerizing a C₁-C₆ olefin compound, such as ethylene, propylene, 1-butene, or isobutylene, serving as a main monomer; and
(II) a process comprising homopolymerizing a diene compound, such as butadiene or isoprene, or copolymerizing the above-described olefin compound and a diene compound, followed by hydrogenation.

Among these polymers, isobutylene polymers and hydrogenated polybutadiene polymers are preferable in view of easiness to introduce functional groups to the termini and to control the molecular weight, or ability to increase the number of terminal functional groups.

All of the monomer units of the isobutylene polymer may be composed of isobutylene units. Alternatively, the isobutylene polymer may preferably contain 50 wt% or less, more preferably 30 wt% or less, and still more preferably 10 wt% or less of units derived from monomers copolymerizable with isobutylene.

Examples of such a monomer component include C₄-C₁₂ olefins, vinyl ethers, aromatic vinyl compounds, vinylsilanes, and allylsilanes. Examples of such a copolymer component include 1-butene, 2-butene, 2-methyl-1-butene, 3-methyl-1-butene, pentene, 4-methyl-1-pentene, hexene, vinylcyclohexane, methyl vinyl ether, ethyl vinyl ether, isobutyl vinyl ether, styrene, α-methylstyrene, dimethylstyrene, monochlorostyrene, dichlorostyrene, β-pinene, indene, vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, tetravinylsilane, allyltrichlorosilane, allylmethyldichlorosilane, allyldimethylchlorosilane, allyldimethylmethoxysilane, allyltrimethylsilane, diallyldichlorosilane, diallyldimethoxysilane, diallyldimethylsilane, γ-methacryloyloxypropyltrimethoxysilane, and γ-methacryloyloxypropylmethyldimethoxysilane.

When a vinylsilane or an allylsilane is used as the monomer copolymerizable with isobutylene, the silicon content in the polymer is increased, and the number of the groups that acts as a silane coupling agent can be increased. Thereby, adhesiveness of the resulting composition is enhanced.

As the isobutylene polymer, the hydrogenated polybutadiene polymer or the other saturated hydrocarbon polymer may contain other monomer units in addition to the main component monomer unit.

As long as the object of the present invention is achieved, the saturated hydrocarbon polymer used in the present invention may contain small amounts of, preferably 10% or less, more preferably 5% or less, and most preferably 1% or less of monomer units having double bonds that remains unreacted even after polymerization. Examples of such monomer units include polyene compounds such as butadiene and isoprene.

The number-average molecular weight of the saturated hydrocarbon polymer, in particular, the isobutylene polymer or the hydrogenated polybutadiene polymer, is preferably 500 to 100,000 in terms of polystyrene determined by gel permeation chromatography (GPC). In particular, a liquid and/or fluid saturated hydrocarbon polymer having a number-average molecular weight of 1,000 to 30,000 is preferable from the standpoint of handling ease. Moreover, smaller molecular weight distribution (Mw/Mn) is preferable since viscosity becomes smaller even if the molecular weight is the same..

A process for preparing a saturated hydrocarbon polymer having a reactive silicon group represented by the formula (1) is described:

-Si (R¹₃₋ₐ)Xₐ (1)

(wherein R¹ is a C₁-C₂₀ alkyl group, a C₆-C₂₀ aryl group, a C₇-C₂₀ aralkyl group, or a triorganosiloxy group represented by (R'O)₃Si-; when two R¹s are present, they may be the same or different; the three R's each represent a C₁-C₂₀ monovalent hydrocarbon group and may be the same or different; X is a hydroxyl group or hydrolyzable group; when two or more Xs are present, they may be the same or different; and a is 1, 2, or 3). The processes of producing an isobutylene polymer and a hydrogenated polybutadiene polymer are described here as examples.

Among the isobutylene polymers having the above-described reactive silicon groups, an isobutylene polymer having a reactive silicon group at a molecular terminus can be prepared using an isobutylene polymer having some or, preferably, all of its termini occupied by functional groups, the isobutylene polymer being prepared by an iniferter polymerization method (i.e., a cationic polymerization method using a particular compound that serves as both an initiator and a chain transfer agent). This production method is disclosed in Japanese Unexamined Patent Application Publication Nos. 63-006003, 63-006041, 63-254149, 64-022904, and 64-038407, for example. It is particularly preferable to produce an isobutylene polymer having a reactive silicon group at the molecular termini by addition reaction of a hydrosilane compound having a hydrogen atom bonded to a group represented by the general formula (1) into an unsaturated group-terminated isobutylene polymer in the presence of a platinum catalyst.

An isobutylene polymer having a reactive silicon group inside the molecule may be produced by adding a vinylsilane or allylsilane having a reactive silicon group to monomers mainly composed of isobutylene to perform copolymerization.

Furthermore, upon the polymerization for producing isobutylene polymer having a reactive silicon group at a molecular terminus, copolymerization of a vinylsilane or allylsilane having a reactive silicon group in addition to the main component, i.e., an isobutylene monomer and following introduction of a reactive silicon group at a terminus of the resulting copolymer gives an isobutylene polymer having reactive silicon groups at a terminus and inside the molecular chain.

Examples of such a vinylsilane and allylsilanes having reactive silicon groups include vinyltrichlorosilane, vinylmethyldichlorosilane, vinyldimethylchlorosilane, vinyldimethylmethoxysilane, divinyldichlorosilane, divinyldimethoxysilane, allyltrichlorosilane, allylmethyldichlorosilane, allyldimethylchlorosilane, allyldimethylmethoxysilane, diallyldichlorosilane, diallyldimethoxysilane, γ-methacryloyloxypropyltrimethoxysilane, and γ-methacryloyloxypropylmethyldimethoxysilane.

An example of the process for producing a hydrogenated polybutadiene polymer is explained below. First, a hydroxyl group of a hydroxyl-terminated hydrogenated polybutadiene polymer is converted to an oxymetal group, such as -ONa or -OK. The resulting polymer is then reacted with an organohalide represented by the general formula (2) below to produce a hydrogenated polybutadiene polymer having a terminal olefin group (hereinafter this polymer is also referred to as "olefin-terminated hydrogenated polybutadiene polymer"):

CH₂=CH-R²-Y (2)

(wherein Y is a halogen atom, such as a chlorine atom or an iodine atom; R² is -R³-, -R³-OC (=O) -, or -R³-C (=O)- (wherein R³ is a C₁-C₂₀ divalent hydrocarbon group and is preferably alkylene, cycloalkylene, arylene, or aralkylene). Y is preferably a divalent organic group selected from -CH₂- and -R⁴-Ph-CH₂- (wherein R⁴ is a C₁-C₁₀ hydrocarbon group and "Ph" is p-phenylene group)).

Examples of such a process to convert a terminal hydroxyl group of the hydroxyl-terminated hydrogenated polybutadiene polymer to an oxymetal group include those processes comprising the step of reacting the polymer with alkali metals such as Na and K, metal hydrides such as NaH, metal alkoxides such as NaOCH₃, and caustic alkalis such as NaOH and KOH.

The above-described methods give an olefin-terminated hydrogenated polybutadiene polymer having substantially the same molecular weight as the starting material, i.e., the hydroxyl-terminated hydrogenated polybutadiene polymer. If a polymer having a higher molecular weight is desired, such a polymer can be obtained by the following process. First, prior to the reaction with the organohalide represented by the general formula (2), the polymer is subjected to reaction with a polyvalent organohalide containing two or more halogen atoms per molecule, such as methylene chloride, bis(chloromethyl)benzene, or bis(chloromethyl)ether to increase the molecular weight. Then the obtained polymer is subject to reaction with the organohalide represented by the general formula (2) above. In this manner, an olefin-terminated hydrogenated polybutadiene polymer having a higher molecular weight can be obtained.

Examples of such an organohalide represented by the general formula (2) include, but are not limited to, allyl chloride, allyl bromide, vinyl(chloromethyl)benzene, allyl(chloromethyl)benzene, allyl(bromomethyl)benzene, allyl(chloromethyl)ether, allyl(chloromethoxy)benzene, 1-butenyl(chloromethyl)ether, 1-hexenyl(chloromethoxy)benzene, and allyloxy(chloromethyl)benzene. Of these, allyl chloride, which is inexpensive and highly reactive, is preferred.

Introduction of the reactive silicon group to the olefin-wterminated hydrogenated polybutadiene polymer may be conducted in the same manner as the case of the isobutylene polymer having a reactive silicon group at the terminus of the molecular chain. For example, the introduction may be conducted by addition reaction of a hydrosilane compound having a hydrogen atom bonded to the group represented by the general formula (1) above in the presence of a platinum catalyst.

The plasticizer (C) usable in the present invention is not limited and a known plasticizer may be used. Examples of such a plasticizer include phthalates such as dibutyl phthalate, diheptyl phthalate, di(2-ethylhexyl) phthalate, butyl benzyl phthalate, di-n-octyl phthalate, diisononyl phthalate, diisodecyl phthalate, diundecyl phthalate; non-aromatic dibasic acid esters such as di(2-ethylhexyl) adipate, di-n-octyl adipate, diisononyl adipate, diisodecyl adipate, di(2-ethylhexyl) sebacate, di-2-ethylhexyl tetrahydrophthalate; process oil such as paraffin base oil, naphthene base oil, and aromatic base oil; fatty acid oil such as linseed oil, soybean oil, and tung oil; aromatic esters such as tri-2-ethylhexyl trimellitate and triisodecyl trimellitate; fatty acid esters such as butyl oleate, methyl acetylricinolate, and pentaerythritol ester; polyvinyl oligomers such as polybutene, hydrogenated polybutene or hydrogenated α-olefin oligomer; hydrogenated polybutadiene oligomers such as hydrogenated liquid polybutadiene; paraffins such as paraffin oil and chlorinated paraffin oil; cycloparaffin such as naphthene oil; aromatic oligomers such as biphenyl and triphenyl; completely or partially hydrogenated aromatic oligomers; sulfonate compounds such as phenyl alkylsulfonate; and sulfonamide compounds such as toluene sulfonamide, N-ethyltoluene sulfonamide, and N-cyclohexyltoluene sulfonamide. These may be used alone or in combination.

Addition of the plasticizer (C) decreases viscosity of the composition and improves the handleability of the composition. Aromatic oligomers, completely or partially hydrogenated aromatic oligomers, sulfonate compounds, and sulfonamide compounds are preferable since they tend to notably increase dispersion stability of the component (A) and the component (B) used in the present invention.

When the plasticizer (C) is incorporated, the plasticizer (C) content is preferably 5 to 300 parts by weight, more preferably 10 to 150 part by weight, and most preferably 30 to 120 parts by weight per 100 parts by weight of the component (A). At a content less than 5 parts by weight, the effect of decreasing the viscosity of the composition and effect of improving the compatibility and dispersibility of the component (A) and the component (B) may become insufficient. At a content exceeding 300 parts by weight, sufficient mechanical properties may not be obtained.

The curable composition of the present invention may optionally further contain an epoxy resin (D). Incorporation of an epoxy resin increases the strength of the cured product, and the problem of rut formation in summer season or the like can be overcome. Examples of such an epoxy resin (D) include, but are not limited to, flame-resisting epoxy resins such as epichlorohydrin-bisphenyl A-type epoxy resins, epichlorohydrin-bisphenyl F-type epoxy resins, and glycidyl ethers of tetrabromobisphenol A; novolac-type epoxy resins; hydrogenated bisphenol A-type epoxy resins; glycidyl ether epoxy resins of bisphenol A propylene oxide adducts; p-oxybenzoic acid glycidyl ether ester-type epoxy resins; m-aminophenol-type epoxy resins; diaminodiphenylmethane-type epoxy resins; urethane-modified epoxy resins; various alicyclic epoxy resins; glycidyl ethers of polyhydric alcohols, such as N,N-diglycidylaniline, N,N-diglycidyl-o-toluidine, triglycidyl isocyanulate, polyalkylene glycol diglycidyl ether, and glycerol; and unsaturated polymers modified with epoxy compounds, such as hydantoin-type epoxy resins and petroleum resins. Any other common epoxy resins may also be used. An epoxy resin having two or more epoxy groups in the molecule is preferable since it exhibits high reactivity in curing, and a three-dimensional network can be easily formed in the cured product. Bisphenol A-type epoxy resins and novolac-type epoxy resins are particularly preferable.

When the epoxy resin (D) is added, the content thereof is preferably 5 to 120 parts by weight, more preferably 5 to 100 parts by weight, and most preferably 20 to 100 parts by weight per 100 parts by weight of the component (A). At a content exceeding 120 parts by weight, storage stability tends to be insufficient. At a content less than 5 parts by weight, the effect of improving strength expected by the addition of the epoxy resin (D) may not be satisfactorily produced.

When the epoxy resin (D) is added to the composition of the present invention, a curing agent may be added to promote curing of the epoxy resin. The epoxy resin curing agent usable here is not particularly limited and may be a known epoxy resin curing agent. Examples of such an curing agent include, but are not limited to, primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophorone diamine, and amine-terminated polyethers; tertiary amines, such as 2,4,6-tris(dimethylaminomethyl)phenol and tripropylamine, and their salts; polyamide resins; imidazoles; dicyanediamides; boron trifluoride complex compounds, carboxylic anhydrides such as phthalic anhydride, hexahydrophthalic anhydride, tetrahydrophthalic anhydride, dodecinyl succinic anhydride, pyromellitic anhydride, and chlorendic anhydride; alcohols; phenols; carboxylic acids; and compounds such as diketone complexes of aluminum or zirconium. These curing agents can be used alone or in combination.

When the curing agent for the epoxy resin is used, the content thereof is preferably 0.1 to 300 parts by weight per 100 parts by weight of the epoxy resin.

A ketimine compound may be used as the curing agent for epoxy resins. Ketimine compounds are stable in a water-free environment and are decomposed into primary amines and ketones by water. The primary amines thus produced can serve as room-temperature curing agents for epoxy resins. Use of the ketimine compound gives a one-component composition. The ketimine compound is obtainable by condensation reaction between an amine compound and a carbonyl compound.

The ketimine compound may be synthesized using a known amine compound and a known carbonyl compound. Examples of such an amine compound include diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, p,p'-biphenylenediamine; polyvalent amines such as 1,2,3-triaminopropane, triaminobenzene, tris (2-aminoethyl) amine, and tetra (aminomethyl) methane; polyalkylene polyamines such as diethylenetriamine, triethylenetriamine, and tetraethylenepentamine; polyoxyalkylene polyamines; and aminosilanes such as γ-aminopropyltriethoxysilane, N-(β-aminoethyl)-γ-aminopropyltrimethoxysilane, and N-(β-aminoethyl)-γ-aminopropylmethyldimethoxysilane. Examples of such a carbonyl compound include aldehydes such as acetaldehyde, propionaldehyde, n-butylaldehyde, isobutylaldehyde, diethylacetaldehyde, glyoxal, and benzaldehyde; cyclic ketones such as cyclopentanone, trimethylcyclopentanone, cyclohexanone, trimethylcyclohexanone; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone, and diisobutyl ketone; and β-dicarbonyl compounds such as acetylacetone, methyl acetoacetate, ethyl acetoacetate, dimethyl malonate, diethyl malonate, methyl ethyl malonate, and dibenzoylmethane.

If an imino group exists in the ketimine compound, the imino group may be reacted with styrene oxide; a glycidyl ether such as butyl glycidyl ether or allyl glycidyl ether; or a glycidyl ester. These ketimine compounds may be used alone or in combination. The ketimine compounds may be used in an amount of 1 to 100 parts by weight per 100 parts by weight of the epoxy resin (D). The amount of the ketimine compound used Varies depending on the type of the epoxy resin and the ketimine compound.

The curable composition of the present invention may contain an alkyl (meth)acrylate polymer (E). The term "alkyl (meth)acrylate polymer" is a polymer comprising, as the main monomer component, an alkyl methacrylate and/or an alkyl acrylate represented by the general formula (3):

CH₂=C(R⁵)COOR⁶ (3)

(wherein R⁵ is a hydrogen atom or a methyl group; and R⁶ is a C₁-C₃₀ alkyl group) . The term refers to a polymer of a single monomer or a copolymer of a plurality of monomers. Incorporation of the alkyl (meth)acrylate polymer (E) in the curable composition of the present invention improves adhesiveness and weather resistance of the composition.

Examples of R⁶ in the general formula (3) include methyl, ethyl, propyl, n-butyl, tert-butyl, 2-ethylhexyl, nonyl, lauryl, tridecyl, cetyl, stearyl, and behenyl. One or more types of monomer represented by the general formula (3) may be used.

When two or more types of monomer are used, it is preferable to use a monomer (a) with R⁶ in the general formula (3) representing an alkyl group containing 1 to 8 carbon atoms and a monomer (b) with R⁶ in the general formula (3) representing an alkyl group containing 10 or more carbon groups in combination. This is because compatibility of the curable composition can be easily controlled by adjusting the ratio between the two monomers used.

Examples of such an alkyl (meth)acrylate include methyl (meth)acrylate, ethyl (meth) acrylate, n-propyl (meth)acrylate, n-butyl (meth)acrylate, isobutyl (meth)acrylate, tert--butyl (meth)acrylate, n-hexyl (meth)acrylate, heptyl (meth)acrylate, 2-ethylhexyl (meth)acrylate, nonyl (meth)acrylate, decyl (meth)acrylate, undecyl (meth)acrylate, lauryl (meth)acrylate, tridecyl (meth)acrylate, myristyl (meth)acrylate, cetyl (meth)acrylate, stearyl (meth)acrylate, and behenyl (meth)acrylate.

The molecular chain of the component (E) is substantially composed of one or more types of alkyl (meth)acrylate monomer units. The phrase "substantially composed of one or more types of alkyl (meth)acrylate monomer units" means that the ratio of the alkyl (meth) acrylate monomer units in the component (E) exceeds 50 wt% and preferably is 70 wt% or more. The component (E) may additionally contain other monomer units copolymerizable with the alkyl (meth)acrylate ester monomer units. For example, monomers having a carboxylic acid group such as (meth) acrylic acid, monomers having an amido group such as (meth)acrylamide or N-methylol(meth)acrylamide, monomers having an epoxy group such as glycidyl (meth) acrylate, or monomers having an amino group such as diethylaminoethyl (meth)acrylate or aminoethyl vinyl ether, are preferable since such copolymerization of monomers will improve hygroscopic moisture curability and in-depth curability. Other examples include monomer units derived from acrylonitrile, styrene, α-methylstyrene, alkyl vinyl ether, vinyl chloride, vinyl acetate, vinyl propionate, and ethylene.

The polymer of the component (E) may further contain a reactive silicon group represented by the general formula (1) below:

-Si(R¹₃₋ₐ)Xₐ (1)

(wherein R¹ is a C₁-C₂₀ alkyl group, a C₆-C₂₀ aryl group, a C₇-C₂₀ aralkyl group, or a triorganosiloxy group represented by (R'O)₃Si-; when two R¹s are present, they may be the same or different; the three R's each represent a C₁-C₂₀ monovalent hydrocarbon group and may be the same or different; X is a hydroxyl group or hydrolyzable group; when two or more Xs are present, they may be the same or different; and a is 1, 2, or 3).

Examples of methods for introducing a reactive silicon group to the polymer of the component (E) include a method comprising copolymerizing a compound having both a polymerizable unsaturated bond and a reactive silicon group with a (meth) acrylic acid alkyl ester monomer. Examples of such a compound having both a polymerizable unsaturated bond and a reactive silicon group include monomers represented by the general formulae (4) and/or (5) below:

CH₂=C(R⁵)COOR⁷-Si(R¹₃₋ₐ)Xₐ (4)

(wherein R⁵ is the same as above; R⁷ is a C₁-C₆ divalent alkylene group; and R¹, X, and a are the same as above) ; and

CH₂=C(R⁵)-Si (R¹₃₋ₐ)Xₐ (5)

(wherein R⁵, R¹, X, and a are the same as above).

The monomers represented by the general formulae (4) and/or (5) may be any known monomers. Examples of such monomers include γ-methacryloxypropylpolyalkoxysilanes such as γ-methacryloxypropyltrimethoxysilane, γ-methacryloxypropylmethyldimethoxysilane, and γ-methacryloxypropyltriethoxysilane; γ-acryloxypropylpolyalkoxysilanes such as γ-acryloxypropyltrimethoxysilane, γ-acryloxypropylmethyldimethoxysilane, and γ-acryloxypropyltriethoxysilane; vinylalkylpolyalkoxysilane such as vinyltrimethoxysilane, vinylmethyldimethoxysilane, and vinyltriethoxysilane.

The component (E) may be produced by a common vinyl polymerization, e.g., solution polymerization by radical reaction. The polymerization is usually conducted by reacting a mixture of the above-described monomers and a radical initiator, a chain transfer agent, or the like at 50°C to 150°C. In general, the reaction product has a molecular weight distribution larger than 1.8.

Examples of such a radical initiator include azo initiators such as 2,2'-azobisisobutyronitrile, 2,2'-azobis(2-methylbutyronitrile), 4,4'-azobis(4-cyanovaleric acid), 1,1'-azobis(1-cyclohexanecarbonitrile), azobisisobutyrate amidine hydrochloride salt, 2,2'-azobis(2,4-dimethylvaleronitrile); and organic peroxide initiators such as benzoyl peroxide and di-tert-butyl peroxide. Azo initiators are preferable since they are not affected by the solvent used for polymerization and have a smaller risk of explosion and the like.

Examples of such a chain transfer agent include mercaptans such as n-dodecyl mercaptan, tert-dodecyl mercaptan, lauryl mercaptan, γ-mercaptopropyltrimethoxysilane, γ-mercaptopropylmethyldimethoxysilane, γ-mercaptopropyltriethoxysilane, and γ-mercaptopropylmethyldiethoxysilane; and halogen-containing compounds.

The polymerization may be conducted in a solvent. Preferable examples of such a solvent include nonreactive solvents such as ethers, hydrocarbons, and esters.

From the standpoint of ease of handling, the component (E) preferably has a number-average molecular weight of 500 to 100, 000 in terms of polystyrene by GPC analysis. The component (E) more preferably has a number-average molecular weight of 1, 500 to 30,000 so that workability is high and the weather resistance of the cured product is improved.

When the component (E) is used, the ratio of the amount of (B) to the amount of the component (E), i.e., (B) / (E), is preferably 95/5 to 10/90 and more preferably 80/20 to 60/40 on a weight basis.

The ratio of the total amount of the components (B) and (E) to the amount of the component (A) is preferably 10 to 500 parts by weight, more preferably 10 to 300 parts by weight, and most preferably 30 to 200 parts by weight per 100 parts by weight of the component (A).

The tackifier resin (F) used in the present invention is not particularly limited and any known one can be used. Examples of such a tackifier resin include petroleum resins such as aliphatic petroleum resins (C-5 resins), aromatic petroleum resins (C-9 resins), aliphatic/aromatic mixed petroleum resins (C-5/C-9 resins), phenol-modified C-5/C-9 resins, and dicyclopentadiene petroleum resins; rosin ester resins such as ester compounds of rosin acid, disproportionated rosin acid, hydrogenated rosin acid, or polymerized rosin acid with glycerol or pentaerythritol; terpene-type resins such as terpene resin, hydrogenated terpene resins, aromatically modified terpene resins, aromatically modified hydrogenated terpene resins, phenol-modified terpene resins (terpene phenol resins), alkylphenol-modified terpene resins; styrene resins; xylene resins such as xylene resin, phenol-modified xylene resins, and alkylphenol-modified xylene resins; phenol resins such as novolac-type phenol resins, resol-type phenol resins, alkylphenol resins, rosin-modified phenol resins, cashew oil-modified phenol resins, and tall-oil modified phenol resins; and modified resins produced by modifying these resins with epoxy resins or acryl monomers. These may be used alone or in combination as a mixture of two or more of these resins if necessary. In particular, resins modified with phenol or an alkylphenol are preferably used so that compatibility and dispersion stability between the component (A) and the component (B) can be improved.

When the component (F) is used, the amount of the component (F) used is 3 to 50 parts by weight, preferably 5 to 30 parts by weight, and most preferably 5 to 20 parts by weight per 100 parts by weight of the component (B).

If necessary, various additives, such as a silanol condensation catalyst, a filler, a thixotropic agent, and an antioxidant may be added to the curable composition of the present invention.

The silanol condensation catalyst is not particularly limited and any known one can be used. Examples of such a silanol condensation catalyst include silanol condensation catalysts below and other known silanol condensation catalysts such as acidic and basic catalysts. Specific examples of such a silanol condensation catalyst include titanates such as tetrabutyl titanate and tetrapropyl titanate; organotin compounds such as dibutyltin dilaurate, dibutyltin maleate, dibutyltin diacetate, tin octylate, tin naphthenate, a reaction product of dibutyltin oxide and a phthalate, and dibutyltin bisacetylacetonate; organoaluminum compounds such as aluminum trisacetylacetonate, aluminum trisethylacetoacetate, and diisopropoxyaluminum ethylacetoacetate; chelate compounds such as zirconium tetraacetylacetonate and titanium tetraacetylacetonate; lead octoate; amine compounds such as butylamine, octylamine, dibutylamine, laurylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo[5.4.0]undecene-7, and salts of these amine compounds with carboxylic acid and the like; acidic phosphates; reaction products of acidic phosphates and amines; saturated or unsaturated polyvalent carboxylic acid or its acid anhydrides; low-molecular-weight-polyamide resins obtained from excess polyamines and polybasic acids; reaction products of excess polyamines and epoxy compounds; and amino-containing silane coupling agents such as γ-aminopropyltrimethoxysilane and N-(β-aminoethyl)-γ-aminopropylmethyldimethoxysilane.

These catalysts may be used alone or in combination.

The silanol condensation catalyst is used preferably in an amount of 0.01 to 15 parts by weight and more preferably 0.1 to 10 parts by weight to 100 parts by weight of the component (B), or, when both the component (E) and the component (B) are used, to the total of 100 parts by weight of the components (B) and (E) . If the amount is less than 0.01 parts by weight, curability of the composition is decreased, and if it exceeds 15 parts by weight, storage stability and the adhesiveness are degraded. From the standpoints of the curing rate and the storage stability, tetravalent tin catalysts are preferable.

The filler is not particularly limited, and known filler may be used. Examples of such filler include inorganic filler such as calcium carbonate, magnesium carbonate, titanium oxide, fly ash, silicon sand, crushed stone, gravels, carbon black, fused silica, precipitated silica, diatomaceous earth, white clay, kaolin, clay, talc, wood flour, walnut shell flour, rice husk flour, silicic acid anhydride, quartz powder, aluminum powder, zinc powder, asbestos, glass fibers, carbon fibers, glass beads, alumina, glass balloon, fly ash balloon, Shirasu balloon, silica balloon, and silicon oxide; and organic fillers such as wood filler, e.g., pulp and cotton chips, powdered rubber, regenerated rubber, thermoplastic or thermosetting resin fine powder, and hollow substances such as polyethylene. These fillers may be used alone or in combination.

The filler is preferably used in an amount of 50 to 1,000 parts by weight and more preferably 60 to 900 parts by weight per 100 parts by weight of the component (B). At a filler content less than 50 parts by weight, the purpose of using the filler may not be fulfilled. At a content exceeding 1,000 parts by weight, viscosity may increase and workability may be degraded. Fly ash balloon and calcium carbonate are particularly preferred as the filler.

The thixotropic agent is not particularly limited and may be a known one. Specific examples of such a thixotropic agent include hydrogenated castor oil, organic amide wax, organic bentonite, and calcium stearate. These thixotropic agents may be used alone or in combination.

The thixotropic agent is preferably used in an amount of 0.1 to 50 parts by weight and more preferably 1 to 30 parts by weight per 100 parts by weight of the component (B). If the thixotropic agent is used in an amount less than 0.1 parts by weight, sufficient thixotropy may not be obtained. If the amount exceeds 50 parts by weight, cost increases.

The antioxidant is not particularly limited, and a known one may be used. Examples of such an antioxidant include phenol antioxidants, aromatic amine antioxidants, sulfur antioxidant, phosphorus antioxidants, benzotriazole UV absorbers, salicylate UV absorbers, benzoate UV absorbers, benzophenone UV absorbers, hindered amine photostabilizers, and nickel photostabilizers.

The anti oxidant is preferably used in an amount of 0.01 to 20 parts by weight and more preferably 0.1 to 10 parts by weight per 100 parts by weight of the component (B).

Examples of such phenol antioxidants include 2,6-di-tert-butylphenol, 2,4-di-tert-butylphenol, 2,6-di-tert-butyl-4-methylphenol, 2,5-di-tert-butylhydroquinone, n-octadecyl-3-(3,5-di-tert-butyl-4-hydroxyphenyl) propionate, pentaerythrityl-tetrak-is[3-(3,5-di-tert-butyl-4-hydroxyphenyl) propionate], 2,2'-methylenebis(4-methyl-6-tert-butylphenol), 4,4'-butylidenebis(3-methyl-6-tert-butylphenol), and 4,4'-thiobis(3-methyl-6-tert-butylphenol).

Examples of such aromatic amine antioxidants include N,N'-diphenyl-p-phenylenediamine and 6-ethoxy-2,2,4-trimethyl-1,2-dihydroquinoline.

Examples of such sulfur antioxidants include dilauryl-3,3'-thiodipropionate, ditridecyl-3,3'-thiodipropionate, and distearyl-3,3'-thiodipropionate.

Examples of such phosphorus antioxidants include diphenyl isooctyl phosphite and triphenyl phosphite.

Examples of such benzotriazole UV absorbers include 2-(3,5-di-tert-butyl-2-hydroxyphenyl)-5-chlorobenzotriazole, 2-(3-tert-butyl-5-methyl-2-hydroxyphenyl)-5-chlorobenzotriazole, 2-(3,5-di-tert-butyl-2-hydroxyphenyl)benzotriazole, and 2-(5-methyl-2-hydroxyphenyl)benzotriazole.

Examples of such salicylate UV absorbers include 4-tert-butylphenyl salicylate.

Examples of such benzoate UV absorbers include 2,4-di-tert-butylphenyl-3,5-di-tert-butyl-4-hydroxybenzoate.

Examples of such benzophenone UV absorbers include 2,4-dihydroxybenzophenone, 2-hydroxy-4-methoxybenzophenone, 2-hydroxy-4-n-octoxybenzophenone, 2-hydroxy-4-n-dodecyloxybenzophenone, and 2-hydroxy-4-benzyloxybenzophenonee Examples of such hindered amine photostabilizer include bis(2,2,6,6,-tetramethyl-4-piperidyl) sebacate, bis (1, 2, 2, 6, 6,-perltamethyl-4-piperidyl) sebacate, 1-{2-[3-(3,5-di-tert-butyl-4-hydroxyphenyl)-propionyloxy)]ethyl}-4-[3-(3,5-di-tert-butyl-4-hydroxyphenyl)propionyloxy]-2,2,6,6,-tetramethylpiperidine, and 4-benzoyloxy-2,2,6,6,-tetramethylpiperidine.

Examples of such nickel photostabilizers include nickel dibutyldithiocarbamate, [2,2'-thiobis(4-tert-octylphenolato)]-2-ethylhexylamine nickel(II), and [2,2'-thiobis(4-tert-octylphenolato)]-n-butylamine nickel (II).

These antioxidants may be used singly or in combination. In some cases, a combination of two or more of these antioxidants functions more effectively compared to the case using an single antioxidant.

The curable composition of the present invention may be applicable to sealing materials, adhesives, pressure-sensitive adhesives, injection materials, waterproof materials, damping materials, and sound insulating materials in various fields including civil engineering, construction, and industrial uses.

In particular, the curable composition of the present invention is applicable to sealants for joints of interior and exterior walls, floors, various concretes, and metal; marine sealants; sealants for joint of pools; ant-proof sealants; adhesives for floor materials, wall materials and roofing material; adhesives for tiles, stone materials and decoration panels used as interior and exterior walls; sealing adhesives for clay pipes, man-holes, cables and the like; potting materials; various pressure-sensitive adhesives, pavement materials for general road, highways, and airport runways; repairing materials; joint sealing materials; waterproof materials for basements of buildings and multilevel car parking; roof waterproofing materials; roof coating materials; and damping and sound insulating materials for vehicles, ships, and home electric appliances.

The curable composition of the present invention is particularly suitable for applications to adhesives for tiles, waterproof materials, road paving materials, water stopping materials for civil engineering, and damping materials, among these applications. Applications to waterproof materials, tile adhesives, road paving materials, water stopping materials for civil engineering, and damping materials is described below.

### <Waterproof material>

The mainstream of the way to perform waterproofing work is hot-applied asphalt waterproofing roofing method, comprising the steps of melting blown asphalt at the construction site, thereby boding asphalt roofing repeated three to four times to form a waterproofing layer. Other examples of such a way to perform waterproofing work include the torch roofing method comprising heating the rear side of an asphalt roofing sheet with a special torch burner so that the sheet can be fixed onto the base material while melting the asphalt applied on the rear side; the ambient-temperature (adhesion) roofing method, comprising fixing an asphalt roofing sheet on the base material with an adhesive applied to the rear side of the sheet and a bonding roofing method comprising fixing asphalt roofing sheet onto the base material with an asphalt-based adhesive. The hot-applied asphalt waterproofing roofing method has high waterproofing reliability (adhesive property to the base material) and thus has been the mainstream of the waterproofing work.

However, the hot-applied asphalt waterproofing roofing method has drawbacks in that, upon melting asphalt, significantly large amounts of fumes and odor generated from the molten asphalt seriously pollutes the surrounding environment. Thus, the method has been avoided to apply in residential areas and central urban areas. Thus, the applicable area has been limited. Moreover, workers also hate to perform this method considering the risk of burn injury.

In order to overcome these problems, prior to the bonding of the asphalt roofing sheets, a cut-back asphalt prepared by diluting asphalt with a solvent is used as the primer to improve adhesion to the base material. However, volatilization of the solvent significantly causes serious pollution of surrounding environment.

In contrast, a waterproof material incorporating comprising the curable composition of the present invention does not generate asphalt fumes or odor or solvent odor during working. Sufficient room temperature curability is exhibited, and satisfactory waterproof adhesiveness to mortar is achieved. Thus, the waterproof material incorporating the curable composition of the present invention is effective as a waterproof material, an adhesive for asphalt roofing sheets, and a primer.

### <Adhesives for tiles>

Adhesives for tiles are used in tiling walls of buildings, bathrooms, toilets, kitchens, etc. Specific examples of adherends for bonding tiles such as earthenware, ceramic or stoneware tiles include inorganic base materials such as cement mortars, calcium silicate boards, cement boards, ALC boards, and ceramic siding boards; and wood base materials such as plywood laminates.

Conventionally, the major process for tiling was a boll tiling method using kneaded balls of cement mortar. In recent years, this method has been mostly replaced with adhesive tiling methods that use organic adhesives. The adhesives for tiles are roughly classified into aqueous adhesives and reactive adhesives and are selected according to the usage. Aqueous adhesives have drawbacks in waterproofing property since the base resin of the aqueous adhesives is an aqueous emulsion containing a surfactant in a relatively much amount. Moreover, odor, inflammability, and adverse effects to human bodies caused by the organic solvent used to dissolve the tackifier resin, etc., have come into the question. Reactive adhesives are typically urethane resin-based or epoxy resin-based one. Urethane resin-based reactive adhesives have problems of irritation caused by isocyanate contained therein, of harmfulness from organic solvents, and of adverse effects on human bodies. Epoxy resin-based reactive tile adhesives have problems of irritation caused by amine curing agents, hazardous organic solvent, and adverse effects on human bodies.

In addition, the epoxy resin-based adhesives cannot absorb distortion caused by external stress and may cause detachment of tiles by vibration due to earthquake, etc. In order to overcome these problems, one approach is disclosed in Japanese Unexamined Patent Application Publication No. 06-101319. The description reports that addition of a rubber organic polymer or a modified silicone compound improved the brittleness of the cured products of epoxy resins, thereby producing flexible cured products. However, this approach does not provide satisfactory waterproof adhesiveness in a place where designed materials, such as tiles and stones, frequently come into contact with water. In such a place, the tiles and stones tend to detach from the base in such positions.

In contrast, an adhesive for tile, the adhesive comprising the curable composition of the present invention produces excellent waterproof adhesiveness, in particular alkaline waterproof adhesiveness, and is usable without any solvent. Thus, no problem such as odor, inflammability, or adverse effects on human bodies occurs.

### <Road Paving Material>

In using asphalt as the road paving material, hot-applied asphalt paving has been generally employed. The hot-applied asphalt paving has such problems as generation of large amounts of fumes and odor from hot asphalt, and generated fumes and odor seriously pollute surrounding environment. Moreover, asphalt paved through hot-applied asphalt paving has insufficient elasticity and adhesiveness, and surface of the road becomes fluidized as temperature increases in summer, thereby causing cracks and sticky surfaces. In winter, caking power of the aggregates in the asphalt paving material decreases, thereby causing deterioration in the surface layers of the paved asphalt and cracks and separation due to difference in temperature.

In contrast, the road paving material incorporating the curable composition of the present invention makes it possible to perform paving and maintenance without generating fumes or odor.

Upon using the curable composition of the present invention as the road paving material, it is preferable to blend an aggregate to increase the reinforcing property.

The aggregate is preferably one of coarse aggregates, fine aggregates, and fillers used in asphalt paving. The coarse aggregate is generally crushed stone, but may be crushed cobble, gravel, or slag. The fine aggregate is generally sand such as river sand, sea sand, or mountain sand but may be screenings from iron sand or crushed stone. Light-colored aggregates and hard aggregates are also usable. The filler is generally powdered stone prepared by crushing limestone or igneous rocks but may be powder of other rocks, calcium carbonate powder, caustic lime, plaster, fly ash, fly ash balloon, cement, or incinerated ash. Carbon black and pigments are also usable. Moreover, the filler may partly contain short fibers such as asbestos, glass fibers, rock wool, synthetic fibers, or carbon fibers, or mica powder.

### <Water Stopping Material for Civil Engineering>

In the fields of civil engineering and construction, boats and ships, and automobiles, various sealing materials are used to fill or seal joints or cracked parts to provide watertight or airtight properties. Sealing materials containing reactive silicon group-containing organic polymers are widely used from the standpoint of weather resistance, curability, and workability (for example, refer to Japanese Unexamined Patent Application Publication No. 08-003537). However, organic polymers used as the sealing materials do not per se have sufficient waterproofing property. Thus, for example, when they are immersed in water for a long time, permeation of water and decrease in adhesion interfacial force are observed, and sufficient water stopping property and adhesiveness are not obtained. These sealing materials do not have sufficient weather resistance and undergo cracking or the like in the surface or inside once they are exposed to outdoor environment, thereby failing to achieve sufficient water stopping property and adhesiveness.

In contrast, a water stopping material incorporating the curable composition of the present invention has excellent weather resistance, waterproofing property, and adhesiveness.

### <Damping Material>

Damping materials are used in vehicles, buildings, home electric appliances, and the like.

Damping materials has been a material directly or indirectly applied to a vibration generating source to control the vibration, thereby achieving sound insulation. For example, damping materials are used in steel boards such as dash panels that separate the vehicle interior from the engine room, or floors, or trunk rooms; building structures such as floors of each house of a condominium building; and home electric appliances that generate noise, such as air conditioners, compressors, and vacuum cleaners.

In order to bond an asphalt sheet onto a floor line of an automobile so that the asphalt sheet can function as a damping sheet, it is necessary to melt the asphalt by heating. Thus, the thermal fluidity has been a problem, i.e., it has been difficult to maintain evenness of thickness in the sheet. As a result, there have been technical problems of unevenness of damping effects, poor fitability to irregularities of the base material, and thus failure of achieving close and uniform thermal bonding to the base material. In order to overcome these problems, a technique of mixing a fibrous filler to a sheet base material has been disclosed (e.g., Japanese Unexamined Patent Application Publication No. 07-323791). However, this technique does not satisfy the requirements of the properties since it requires thermal bonding of melted asphalt. Moreover, an ambient-temperature curing process is desired to increase efficiency of working and to improve the adhesion to the irregularities.

In contrast, a damping material incorporating the curable composition of the present invention has excellent workability, causes no dilation during working, and exhibits excellent adhesiveness to irregularities.

### EXAMPLES

The present invention will now be described in further details below by way of nonlimiting examples.

### (SYNTHETIC EXAMPLE 1)

A three-way cock was mounted on a 2 L pressure glass container, and the container was purged with nitrogen. Using an injection syringe, 270 ml of ethylcyclohexane dried over molecular shieves 3A, 630 ml of toluene dried over molecular sieves 3A, and 5.80 g (25.1 mmol) of p-dicumyl chloride were injected into the container.

Next, a pressure glass liquid-collecting tube equipped with a needle valve and charged with 280 ml of an isobutylene monomer was connected to the three-way cock. The polymerization container was cooled in a -70°C dry ice/ethanol bath and vacuumed with a vacuum pump. The needle valve was opened to introduce the isobutylene monomer from the liquid-collecting tube into the polymerization container, and then nitrogen was introduced from one port of the three-way cock to return the pressure inside the container to normal. Subsequently, 0.465 g (5.0 mmol) of 2-methylpyridine was added, and then 8.25 ml (75.5 mmol) of titanium tetrachloride was added to initiate polymerization. Seventy minutes after the initiation of polymerization, 6.10 g (54.0 mmol) of allyltrimethylsilane was added to introduce an allyl group to a polymer terminus. One hundred and twenty minutes after the initiation of the polymerization, the reaction solution was washed with 200 ml of water four times, and the solvent was distilled off to produce an allyl-terminated isobutylene polymer.

Next, 400 g of the resulting allyl-terminated isobutylene polymer was combined with 120 g of process oil, i.e., a hydrocarbon plasticizer, Diana Process Oil PS-32 produced by Idemitsu Kosan Co., Ltd. The resulting mixture was heated to about 75°C, and 1.5 [eq/vinyl] of methyldimethoxysilane and 1 × 10⁻⁴ [eq/vinyl] of a platinum-vinylsiloxane complex were added to the mixture to conduct hydrosilylation. As a result of tracking of the reaction with a Fourier transform infrared spectrophotometer (FT-IR), i.e., IR-408 produced by Shimadzu Corporation, the olefin absorption at 1,640 cm⁻¹ was lost in about 20 hours (polymer A: 77% concentration).

The resulting polymer A was analyzed by gel permeation chromatography (GPC) to determine Mn and Mw/Mn and analyzed by ¹H-NMR to determine the percentage of functionalized termini. In the latter analysis, intensity of the resonance signal of a proton corresponding to each structure (the proton derived from the initiator: 6.5 to 7.5 ppm; the methyl proton bonded to the silicon atom and derived from the polymer termini: 0.0 to 0.1 ppm; and methoxy proton: 3.4 to 3.5 ppm) was measured, and the results were compared. The ¹H-NMR was analyzed in CDCl₃ with Varian Gemini 300 (300 MHz). GPC analysis was conducted using Waters LC Module 1 as the delivery system and Shodex K-804 as the column. The analysis of the polymer reported Mn = 11, 400 and Mw/Mn = 1.23, and the number of terminal silyl groups (Fn(silyl)) was 1.76. The number-average molecular weight was determined as polystyrene equivalent, and the number of the terminal silyl groups was represented as the number per molecule of the isobutylene polymer.

### (SYNTHETIC EXAMPLE 2)

An allyl-terminated isobutylene polymer was prepared as in SYNTHETIC EXAMPLE 1 but with 262.5 ml of ethylcyclolhexane, 787.5 ml of toluene, 438 ml (5.15 mol) of isobutylene monomer, 4.85 g (21.0 mmol) of p-dicumyl chloride, 0.72 g (7.7 mmol) of 2-methylpiridine, and 7.20 g (63.0 mmol) of allyltrimethylsilane.

Subsequently, 400 g of the resulting allyl-terminated isobutylene polymer was combined with 200 g of Diana Process Oil PS 32, and the resulting mixture was heated to about 75°C. Then, 1.5 [eq/vinyl] of methyldimethoxysilane and 1 × 10⁻⁴ [eq/vinyl] of a platinum-vinylsiloxane complex were added to conduct hydrosilylation. As a result of tracking of the reaction with FT-IR, and an olefin absorption at 1, 640 cm⁻¹ was lost in about 20 hours (polymer B: 67% concentration).

The analysis of the polymer B reported Mn = 17, 600, Mw/Mn = 1.23, and Fn (silyl) = 1.96.

### (SYNTHETIC EXAMPLE 3)

Using a 1/1 (weight basis) mixture of polyoxypropylene diol having a number-average molecular weight of 2,000 and polyoxypropylene triol having a number-average molecular weight of 3,000 as an initiator, propylene oxide was polymerized in the presence of a zinc hexacyanocobaltate-glyme complex catalyst to produce polypropylene oxide having a number-average molecular weight of 22,000 (polystyrene equivalent determined by GPC). The resulting polypropylene oxide was reacted with sodium methoxide and then with allyl chloride to convert the terminal hydroxyl groups into unsaturated groups. To one mole of the unsaturated group of an unsaturated group-terminated polyoxyalkylene, 0.72 mol of dimethoxymethylsilane was reacted in the presence of chloroplatinic acid to produce a polyoxypropylene polymer (polymer C) having a number-average molecular weight of 22,200 and 70% of molecular termini occupied by dimethoxymethylsilyl groups (¹H-NMR analysis).

### (SYNTHETIC EXAMPLE 4)

Using polyoxypropylene diol having a number-average molecular weight of 2,000 as an initiator, propylene oxide was polymerized in the presence of a zinc hexacyanocobaltate-glyme complex catalyst to produce polyoxypropylene glycol having a number-average molecular weight of 26, 000 (polystyrene equivalent by GPC). The resulting polypropylene glycol was reacted with sodium methoxide and then with allyl chloride to convert the terminal hydroxyl groups into unsaturated groups. To one mole of the unsaturated group of the unsaturated group-terminated polyoxyalkylene polymer, 0.77 mole of a hydrosilane compound represented by HSi (CH₃) (CH₃) OSi (CH₃) (CH₃) CH₂CH₂Si (OCH₃) was reacted in the presence of chloroplatinic acid to produce a polyoxypropylene polymer (polymer D) having a number-average molecular weight of 26,300 and 75% of molecular termini occupied by the trimethoxysilyl groups.

### (SYNTHETIC EXAMPLE 5)

To a pressure reactor equipped with a stirrer, 800 g of polyoxypropylene glycol having a number-average molecular weight of 5,200 and 50.2 g of isophorone diisocyanate were added and mixed. To the resulting mixture, 0.8 g of a tin catalyst (a 10% DOP solution of dibutyltin dilaurate) was added. The resulting mixture was stirred for 4 hours at 80°C to produce an isocyanato group-terminated polymer having a number-average molecular weight of 15,000. The molecular weight here was determined from the titer (0.579%) of the isocyanato groups. The polymer was cooled to 60°C and combined with 1.0 [eq/NCO] of γ-aminopropyltrimethoxysilane. The resulting mixture was stirred for about 30 minutes to produce a polyoxypropylene polymer (polymer E) having a number-average molecular weight of 17,000 (polystyrene equivalent by GPC) and trimethoxysilyl groups at the molecular termini.

### The materials used in EXAMPLES were as follows:

Component (A)
   - Straight asphalt (1): straight asphalt 60 to 80 (produced by Cosmo Oil Co., Ltd.)
   - Straight asphalt (2): straight asphalt 150 to 200 (produced by Cosmo Oil Co., Ltd.)
   - Blown asphalt: blown asphalt 20 to 30 (produced by Cosmo Oil Co., Ltd.)
   - Cut-back asphalt: blown asphalt 20 to 30 diluted with toluene (solid content: 60%)
Component (B)
   - Polymer A or B obtained by the above-described synthesis
Component (C)
   - Mesamoll: phenyl alkylsulfonate (produced by Bayer)
   - Mesamoll II: phenyl alkylsulfonate (produced by Bayer)
   - AC-12: Diana Process Oil AC-12 (produced by Idemitsu Kosan Co., Ltd.)
   - HB-40: partially hydrogenated terphenyl (produced by Solutia Inc.)
   - Topcizer No. 3: N-ethyl-o/p-toluenesulfonamide (produced by Fuji Amide Chemical Co., Ltd.)
Component (D)
   - Epikote 828: epoxy resin (Japan Epoxy Resins Co., Ltd.)
Component (F)
   - PM-100: phenol-modified C-5/C-9 petroleum resin (produced by Toho Chemical Industry Co., Ltd.)
   - HP-70: alkylphenol-modified xylene resin (produced by Fudow Corporation)
   - YS Polyster T-30: phenol-modified terpene resin (produced by Yasuhara Chemical Co., Ltd.)
   - Mightyace G-125: phenol-modified terpene resin (produced by Yasuhara Chemical Co., Ltd.)
(Block Copolymer)
   - SBS: styrene/butadiene/styrene block copolymer
(Rubber Component)
   - SBR: styrene/butadiene rubber
(Silane Coupling Agent)
   - A-1310: γ-isocyanatopropyltriethoxysilane (produced by Dow Corning Toray Silicone Co., Ltd.)
   - A-171: vinyltrimethoxysilane produced by Dow Corning Toray Silicone Co., Ltd.)
   - A-187: γ-glycidoxypropyltrimethoxysilane (produced by Dow Corning Toray Silicone Co., Ltd.)
   - A-1120: N-(β-aminoethyl)-γ-aminopropyltrimethoxysilane (produced by Dow Corning Toray Silicone Co., Ltd.)
(Filler)
   - Whiton SB (calcium carbonate produced by Shiraishi Calcium Kaisha Ltd.)
   - Fly ash balloon: fine, hollow spherical particles (alumina silicate produced by Tokai Kogyo)
   - Sepiolite S: magnesium silicate (produced by Nippon Talc Co., Ltd.)
   - Silica sand: produced by Maruo Calcium Co.
   - Talc: Microace P4 (average particle diameter: 4.5 µm produced by Nippon Talc Co., Ltd.)
   - Aggregate
(Curing Catalyst)
   - SCAT-1: organotin compound (produced by Sankyo Organic Chemicals Co., Ltd.)
   - SCAT-27: organotin compound (produced by Sankyo Organic Chemicals Co., Ltd.)
(Curing Aid)
   - Water
   - Zeolite 4A
(Epoxy Resin Curing Agent)
   - H-30: ketimine type curing agent (produced by Japan Epoxy Resins Co., Ltd.)
(Antioxidant)
   - Irganox 245: hindered phenol antioxidant (produced by Ciba Specialty Chemicals)
(UV absorber)
   - Tinuvin 213: benzotriazole UV absorber (produced by Ciba Specialty Chemicals)
(Photostabilizer)
   - Sanol LS765: hindered amine photostabilizer (produced by Sankyo Co., Ltd.)

### (Evaluation of Physical Properties)

The evaluation was conducted on the following items:

### <Odor>

Whether solvent odor or asphalt fumes or odor was generated during application of a composition was judged. A rating "good" was given when no odor or fume was generated. A rating "poor" was given when odor and/or fume was generated.

### <Curability>

After the application of the composition, the surface was sequentially touched with a spatula, and the time required until the composition no longer stuck onto the spatula was measured (23°C and 50% RH). A rating "good" was given when the surface cured within 30 minutes, and rating "poor" was given otherwise.

### <Storage Stability>

The curable composition was enclosed airtight and left to stand at 50°C for 30 days. The state of separation was evaluated. A rating "good" was given when no separation was observed, and a rating "poor" was given when separation occurred.

### <Waterproof adhesiveness>

The composition in a bead form was applied onto a mortar base material and cured at 23°C and 50% RH for seven days. Subsequently, the mortar base material was immersed in water at 23°C for seven days. Immediately after the mortar base material was taken out of the water, a cut line was made with a cutter between the cured product and the mortar to peel off the cured product. The state of adhesion was observed. A rating "good" was given when the cured product remained on the mortar side, and a rating "poor" was given otherwise. - Mortar: 50 x 50 x 15 [mm], produced by Engineering Test Service

### <Weather Resistance Testing>

A sheet having a thickness of 3 mm was formed from the curable composition and left to stand at 23°C for three days. The resulting sheet was heated at 50°C for four days to produce a rubbery sheet. The rubbery sheet was placed on an aluminum plate having a thickness of 1 mm and set on a sunshine weatherometer (produced by Suga Test Instruments Co., Ltd.) to evaluate weather resistance. A rating "good" was given when no deterioration occurred before 1,000 hours of sunshine, and a rating "poor" was given when deterioration occurred by this time.

### <Workability>

The viscosity of the composition was measured using a BH viscometer (rotor: No. 7, revolution: 10 rpm, temperature: 23°C). A rating "good" was given when the viscosity was 500 Pa·s or less and "poor" was given when the viscosity was more than 500 Pa·s.

### <Test for Measuring Adhesiveness for Tiles>

An adhesive was applied onto a mortar board 70 x 70 x 20 mm in size and flattened uniformly with a comb trowel. A 45 x 45 x 7 mm ceramic tile was bonded thereto and left for seven days (23°C and 50% RH). A tension jig was attached onto the tile surface of a specimen with an epoxy adhesive, and tensile testing was conducted using an autograph (speed of testing: 5 mm/min). The specimen was immersed in 60°C hot water and a 60°C saturated aqueous solution of calcium hydroxide for seven days. The tensile test was performed immediately after the specimen was taken out of the solution to measure waterproof adhesiveness. The ratio of adhesiveness after immersion in the 60°C hot water to adhesiveness on the ordinary state was determined as the waterproof retaining ratio. The ratio of adhesiveness after immersion in the 60°C calcium hydroxide saturated aqueous solution to adhesiveness on the ordinary state was determined as the alkali-resistance retaining ratio.

### (EXAMPLES 1 to 7 and COMPARATIVE EXAMPLES 1 and 2)

Each blend having a composition shown in Table 1 was mixed and kneaded in a 5 L mixer to prepare curable compositions of EXAMPLES 1 to 7 and COMPARATIVE EXAMPLES 1 and 2.

The results are illustrated in Table 1

**Table 1**

| | | | EX. 1 | EX. 2 | EX. 3 | EX .4 | EX. 5 | EX. 6 | EX. 7 | C.EX. 1 | C.EX. 1 |
|---|---|---|---|---|---|---|---|---|---|---|---|
| Main ingredient | Component (A) | Straight (1) asphalt (1) | 70 | 50 | 70 | 70 | 70 | 70 | 70 | | |
| | | Blown asphalt | | | | | | | | 100 | |
| | | Cut-back asphalt | | | | | | | | | 100 |
| | Component (B) | Polymer A | 65 | 65 | | 65 | 65 | 65 | 65 | | |
| | | Polymer B | | | 75 | | | | | | |
| | Block copolymer | SBS | | | | | | | | 10 | 10 |
| | Component (C) | Mesamoll | 40 | 40 | 50 | 40 | 40 | 40 | | | |
| | | AC-12 | 10 | 10 | 20 | 10 | 10 | 10 | | | |
| | | Topcizer No. 3 | | | | | | | 50 | | |
| | Component (F) | PM-100 | 5 | | 5 | | | | 5 | | |
| | | HP-70 | | | | 5 | | | | | |
| | | T-30 | | | | | 5 | | | | |
| | | G-125 | | | | | | 5 | | | |
| | Silane coupling agent | A-1310 | 3 | 3 | 3 | 3 | 3 | 3 | 3 | | |
| | | A-187 | 2 | 2 | 2 | 2 | 2 | 2 | 2 | | |
| | Filler | Whiten SB | 140 | 100 | 190 | 140 | 140 | 140 | 140 | 100 | 100 |
| | | Fly ash balloon | 50 | 90 | | 50 | 50 | 50 | 50 | 100 | 100 |
| Curing agent | Component (C) | AC-12 | 15 | 15 | 15 | 15 | 15 | 15 | 15 | | |
| | Curing catalyst | SCAT-27 | 2 | 2 | 2 | 2 | 2 | 2 | 2 | | |
| | Filler | Whiton SB | 10 | 10 | 10 | 10 | 10 | 10 | 10 | | |
| | Curing aid | Zeolite 4A | 3 | 3 | 3 | 3 | 3 | 3 | 3 | | |
| | | Water | 2 | 2 | 2 | 2 | 2 | 2 | 2 | | |
| Evaluation results | Odor | | Good | Good | Good | Good | Good | Good | Good | Poor | Poor |
| | Curability | | Good | Good | Good | Good | Good | Good | Good | Good | Poor |
| | Storage stability | | Good | Good | Good | Good | Good | Good | Good | Poor | Good |
| | Waterproof adhesiveness | | Good | Good | Good | Good | Good | Good | Good | Poor | Poor |

| | | | | | | | | | | | |
|---|---|---|---|---|---|---|---|---|---|---|---|
| EX. = EXAMPLE, C. EX = COMPARATIVE EXAMPLE | | | | | | | | | | | |

The curable compositions of the Examples produced no asphalt fume or odor or solvent odor during working, and exhibited satisfactory room temperature curability and satisfactory waterproof adhesiveness to mortar substrates. The dispersion stability was also satisfactory. In COMPARATIVE EXAMPLES, there was no example achieving a good balance between these properties.

### (EXAMPLE 8 and COMPARATIVE EXAMPLES 3 to 6) Comparison of Performance as Adhesives for Tile

Each blend having a composition illustrated in Table 2 was mixed and kneaded in a 5 L mixer to prepare adhesives of EXAMPLE 8 and COMPARATIVE EXAMPLES 3 to 6.

The results of the evaluation are illustrated in Table 2.

**Table 2**

| | | EX. 8 | C.EX. 3 | C.EX. 4 | C.EX. 5 | C.EX. 6 |
|---|---|---|---|---|---|---|
| Component (A) | Straight asphalt (2) | 50 | | | | |
| Component (B) | Polymer A | 130 | 130 | | | |
| | Polymer C | | | 100 | | |
| | Polymer D | | | | 100 | |
| | Polymer E | | | | | 100 |
| Component (C) | Mesamoll II | 40 | 80 | 40 | 20 | 20 |
| | HB-40 | | | | 20 | 20 |
| Component (D) | Epikote 828 | 10 | 10 | 10 | 10 | 10 |
| Component (F) | PM-100 | 10 | | | | |
| Silane coupling agent | A-171 | | | 1 | 1 | 1 |
| | A-1310 | 3 | 3 | | | |
| | A-187 | 3 | 3 | 3 | 3 | 3 |
| Filler | Whiton SB | 200 | 200 | 200 | 200 | 200 |
| | Sepiolite S | 5 | 5 | 5 | 5 | 5 |
| | Silica sand | 100 | 100 | 100 | 100 | 100 |
| Curing catalyst | SCAT-1 | | | 1 | 1 | 1 |
| | SCAT-27 | 2 | 2 | | | |
| Epoxy resin curing agent | Epicure H-30 | 5 | 5 | 5 | 5 | 5 |
| Curing aid | Water | 2 | 2 | | | |
| | Zeolite 4A | 3 | 3 | | | |
| Adhesiveness for tiles | Ordinary state (MPa) | 1.5 | 1.2 | 1.4 | 15 | 1.3 |
| | After immersion in water (MPa) | 1,3 | 0.8 | 0.9 | 1.0 | 0.8 |
| | After immersion in alkali (MPa) | 1.1 | 0.5 | 0.6 | 0.7 | 0.6 |
| | Waterproof retaining ratio (%) | 87 | 67 | 64 | 67 | 62 |
| | Alkali-resistance retaining ratio (%) | 73 | 42 | 43 | 47 | 46 |

| | | | | | | |
|---|---|---|---|---|---|---|
| EX. = EXAMPLE, C. EX = COMPARATIVE EXAMPLE | | | | | | |

EXAMPLE showed satisfactory adhesiveness any of the condition at an ordinary state, after the immersion in water and after the immersion in the calcium hydroxide aqueous solution, thereby demonstrating sufficient adhesiveness and durability. In contrast, although COMPARATIVE EXAMPLES exhibited sufficient adhesiveness at an ordinary state, adhesiveness decreased significantly by the immersion in water.

### (EXAMPLE 9 and COMPARATIVE EXAMPLES 7 to 9) Comparison of Performance as Waterproofing Agents

Each blend having a composition shown in Table 3 was mixed and kneaded in a 5 L mixer to prepare waterproofing agents of EXAMPLE 9 and COMPARATIVE EXAMPLES 7 to 9.

The results of evaluation are illustrated in Table 3.

**Table 3**

| | | EX. 9 | C. EX. 7 | C.EX. 8 | C.EX. 9 |
|---|---|---|---|---|---|
| Component (A) | Straight asphalt (2) | 140 | 20 | | |
| | Blown asphalt | | 80 | 100 | |
| | Cut-back asphalt | | | | 100 |
| Component (B) | Polymer A | 130 | | | |
| Component (C) | Mesamoll II | 50 | | | |
| | HB-40 | | | | |
| Component (F) | PM-100 | 10 | | | |
| Block copolymer | SBS | | 10 | 10 | 10 |
| Silane coupling agent | A-1310 | 3 | | | |
| Filler | Calcium carbonate | 200 | 200 | 200 | 200 |
| Curing catalyst Epoxy resin curing agent | SCAT-27 | 2 | | | |
| | Epicure H-30 | | | | |
| Curing aid | Water | 2 | | | |
| | Zeolite 4A | 3 | | | |
| Workability | | Good | Poor | Poor | Poor |
| Odor | | Good | Poor | Poor | Poor |
| Curability | | Good | Good | Good | Poor |
| Storage stability | | Good | Poor | Poor | Good |

| | | | | | |
|---|---|---|---|---|---|
| EX. = EXAMPLE, C. EX = COMPARATIVE EXAMPLE | | | | | |

The waterproofing composition of EXAMPLE produced no asphalt fume or odor or solvent odor during working, and had low viscosity, satisfactory workability, and sufficient room-temperature curability. The storage stability thereof was also satisfactory. In contrast, no example that achieves a good balance between these properties was found in COMPARATIVE EXAMPLES.

### (EXAMPLE 10 and COMPARATIVE EXAMPLES 10 to 13)

### Comparison of Performance as Sealing Material Compositions

Each blend having a composition shown in Table 4 was mixed and kneaded in a 5 L mixer to prepare sealing material compositions of EXAMPLE 10 and COMPARATIVE EXAMPLES 10 to 13.

The results of evaluation are illustrated in Table 4.

**Table 4**

| | | EX. 10 | C.EX. 10 | C.EX. 11 | C.EX. 12 | C.EX. 13 |
|---|---|---|---|---|---|---|
| Component (A) | Straight asphalt (2) | 50 | | | | |
| Component (B) | Polymer A | 130 | 130 | | | |
| | Polymer C | | | 100 | | |
| | Polymer D | | | | 100 | |
| | Polymer E | | | | | 100 |
| Component (C) | Mesamoll | 40 | 80 | 40 | 20 | 20 |
| | HB-40 | | | | 20 | 20 |
| Component (F) | PM-100 | 10 | | | | |
| Silane coupling agent | A-171 | | | 1 | 1 | 1 |
| | A-1120 | | | 2 | 2 | 2 |
| | A-1310 | 3 | 3 | | | |
| Filler | Whiton SB | 200 | 200 | 200 | 200 | 200 |
| Antioxidant | Irganox 245 | 1 | 1 | 1 | 1 | 1 |
| UV absorber | Tinuvin 213 | 1 | 1 | 1 | 1 | 1 |
| Photostabilizer | Sanol LS 765 | 1 | 1 | 1 | 1 | 1 |
| Curing catalyst | SCAT-1 | | | 1 | 1 | 1 |
| | SCAT-27 | 2 | 2 | | | |
| Curing aid | Water | 2 | 2 | | | |
| | Zeolite 4A | 3 | 3 | | | |
| Weather resistance | | Good | Poor | Poof | Poor | Poor |
| Waterproof adhesiveness | | Good | Poor | Poor | Poor | Poor |

| | | | | | | |
|---|---|---|---|---|---|---|
| EX. = EXAMPLE, C. EX = COMPARATIVE EXAMPLE | | | | | | |

The sealing material composition of EXAMPLE 10 showed satisfactory waterproof adhesiveness and weather resistance, but none of compositions of COMPARATIVE EXAMPLES showed satisfactory results.

### (EXAMPLE 11 and COMPARATIVE EXAMPLES 14 to 16)

### Comparison of Performance as Damping Materials

Each blend having a composition shown in Table 5 was mixed and kneaded in a 5 L mixer to prepare sealing material compositions of EXAMPLE 11 and COMPARATIVE EXAMPLES 14 to 16.

The results of evaluation are illustrated in Table 5.

**Table 5**

| | | EX. 11 | C.EX. 14 | C.EX. 15 | C.EX. 16 |
|---|---|---|---|---|---|
| Component (A) | Straight asphalt (2) | 140 | 100 | | 30 |
| | Blown asphalt | | | 100 | 70 |
| Component (B) | PolymerA | 130 | | | |
| Component (C) | Mesamoll II | 50 | | | |
| Component (F) | PM-100 | 10 | | | |
| Rubber component | SBR | | 15 | 15 | 15 |
| Silane coupling agent | A-1310 | 3 | | | |
| Filler | Calcium carbonate | 150 | 150 | 150 | 150 |
| | Talc | 50 | 50 | 50 | 50 |
| Curing catalyst | SCAT-27 | 2 | | | |
| Curing aid | Water | 2 | | | |
| | Zeolite 4A | 3 | | | |
| Workability | | Good | Poor | Poor | Poor |
| Odor | | Good | Poor | Poor | Poor |
| Curability | | Good | Good | Good | Good |
| Storage stability | | Good | Poor | Poor | Poor |

| | | | | | |
|---|---|---|---|---|---|
| EX. = EXAMPLE, C. EX = COMPARATIVE EXAMPLE | | | | | |

The damping material of EXAMPLE that required no heat-melting of the asphalt during working did not suffer from problematic thermal fluidity but had low viscosity and satisfactory workability. It also had sufficient room-temperature curability and storage stability.

### (Blend Example for Road Paving Material)

An example of a blend for a road paving material incorporating the curable composition of the present invention is as follows:

| | |
|---|---|
| Straight asphalt 150 to 200: | 140 parts by weight |
| Polymer A: | 130 parts by weight |
| Mesamoll: | 50 parts by weight |
| PM-100: | 10 parts by weight |
| A-1310: | 3 parts by weight |
| Aggregate: | 200 parts by weight |
| SCAT-27: | 2 parts by weight |
| Water: | 2 parts by weight |
| Zeolite 4A: | 3 parts by weight |

### (SYNTHETIC EXAMPLE 6)

A synthetic example of the component (E) and an example of a blend of the component (E) and the polymer A are as follows.

To 43 g of toluene heated to 110°C, a solution of 2.6 g of azobisisobutyronitrile serving as a polymerization initiator dissolved in a mixture of 6.0 g of butyl acrylate, 66 g of methyl methacrylate, 13 g of stearyl methacrylate, 5.4 g of γ-methacryloxypropylmethyldimethoxysilane, 7.0 g of γ-mercaptopropylmethyldimethoxysilane, and 23 g of toluene was added dropwise over 4 hours. The polymerization was then conducted for 2 hours to produce a copolymer (polymer F) having a solid content of 60% and a number-average molecular weight of 2,200 (polystyrene equivalent) determined by GPC.

The polymer A obtained in SYNTHETIC EXAMPLE 1 was blended with the polymer F obtained in SYNTHETIC EXAMPLE 6 at a 70/30 solid content ratio (weight basis). The blend was heated at 110°C under vacuum in an evaporator to remove volatile components. A clear, viscous liquid having a nonvolatile component content of 99% or more was obtained as a result. This mixture may be blended with the component (A) to prepare the curable composition of the present invention.

## Claims

1. A curable composition, which comprises:
a bituminous substance (A); and
a saturated hydrocarbon polymer (B) having a reactive silicon group represented by the general formula (1):
-Si(R¹₃₋ₐ)Xₐ (1)
(wherein R¹ is a C₁-C₂₀ alkyl group, a C₆-C₂₀ aryl group, a C₇-C₂₀ aralkyl group, or a triorganosiloxy group represented by (R'O)₃Si-; when two R¹s are present, they may be the same or different; the three R's each represent a C₁-C₂₀ monovalent hydrocarbon group and may be the same or different; X is a hydroxyl group or hydrolyzable group; when two or more Xs are present, they may be the same or different; and a is 1, 2, or 3).

2. The curable composition according to claim 1,
wherein the saturated hydrocarbon polymer (B) has a main chain skeleton composed of polyisobutylene.

3. The curable composition according to claim 1 or 2, which further comprises
a plasticizer (C).

4. The curable composition according to claim 3,
wherein the plasticizer (C) is an aromatic oligomer or a completely or partially hydrogenated aromatic oligomer.

5. The curable composition according to claim 3,
wherein the plasticizer (C) is a sulfonate compound or a sulfonamide compound.

6. The curable composition according to any one of claims 1 to 5, which further comprises
an epoxy resin (D).

7. The curable composition according to claim 6,
wherein the epoxy resin (D) is contained in an amount of 5 to 120 parts by weight per 100 parts by weight of the bituminous substance (A).

8. The curable composition according to any one of claims 1 to 7, which further comprises
an alkyl (meth)acrylate polymer (E).

9. The curable composition according to claim 8,
wherein the molecular chain of the alkyl (meth)acrylate polymer (E) is composed of a copolymer of an alkyl (meth)acrylate monomer unit (a) having an alkyl group containing 1 to 8 carbon atoms and an alkyl (meth)acrylate monomer unit (b) having an alkyl group containing 10 or more carbon atoms.

10. The curable composition according to claim 8 or 9,
wherein the alkyl (meth)acrylate polymer (E) is a polymer having a reactive silicon group represented by the general formula (1).

11. The curable composition according to any one of claims 1 to 10, which further comprises
a tackifier resin (F).

12. The curable composition according to claim 11,
wherein the tackifier resin (F) is a tackifier resin modified with phenol and/or an alkylphenol.

13. The curable composition according to any one of claims 1 to 12,
wherein the bituminous substance (A) is a natural asphalt and/or a petroleum asphalt.

14. An adhesive for tiles, the adhesive comprising
the curable composition according to any one of claims 1 to 13.

15. A waterproof material, which comprises
the curable composition according to any one of claims 1 to 13.

16. A road paving material, which comprises
the curable composition according to any one of claims 1 to 13.

17. A water stopping material for civil engineering, the water stopping material comprising
the curable composition according to any one of claims 1 to 13.

18. A damping material, which comprises
the curable composition according to any one of claims 1 to 13.
